# EUROPEAN PATENT SPECIFICATION

(11) **EP 2 783 151 B1**
(45) Date of publication and mention of the grant of the patent: **31.03.2021**
(21) Application number: 12730527.4
(22) Date of filing: 27.06.2012
(51) Int. Cl.: F17C 1/16, F17C 1/06

(54) **IMPROVED BOSS FOR COMPOSITE PRESSURE CONTAINER**
VERBESSERTE NABE FÜR VERBUNDDRUCKBEHÄLTER
BOSSAGE AMÉLIORÉ POUR RÉCIPIENT SOUS PRESSION COMPOSITE

(30) Priority: 28.06.2011 NO 20110929
(43) Date of publication of application: 01.10.2014
(73) Proprietor: Hexagon Ragasco AS, 2831 Raufoss (NO)
(72) Inventor: ULEKLEIV, Rune, N-2819 Gjøvik (NO); HAMNVIK, Per, Vidar, N-2830 Gjøvik (NO)
(74) Representative: Onsagers AS
(86) International application number: PCT/EP2012/062467
(87) International publication number: WO 2013/000954

(56) References cited:
- EP-A2- 2 000 734
- WO-A1-2011/098703
- WO-A1-2011/152732

## Description

The present invention relates to an improved boss for composite pressure container. Especially the present invention relates to a boss including a safety arrangement protecting a user when the boss is being opened.

### Background

This invention concerns an improved boss for a composite pressure container for fluids, wherein the container comprises an inner fluid-tight thermoplastic liner layer and a pressure supporting layer formed by winding fibre-reinforcement onto the liner layer, as well as at least one central aperture in at least one end, for provision of a boss for mounting a coupling or a valve member.

### Prior art

A boss for composite pressure containers is disclosed in Norwegian Patent No. 312048. Composite pressure containers are disclosed in Norwegian Patent No. 306226 and 309667. WO2011/152732A1 discloses a composite pressure container with a boss including an opening for receiving a valve. The opening is the same diameter in an inner area as in a central area.

EP2000734A2 discloses pressure-resistant vessel with a boss with an opening and a valve arranged therein. A pressing member is arranged between the opening of the boss and the valve requiring sealing with at least two O-rings, one between the valve and the pressure member and one between the pressure member and the boss.

Pressure containers like these are subject to numerous and varied types of stress and forces. Mainly, this regards the inner over pressure which may occur when filling the container with fluids. The inner pressure will influence the boss with an axially outward directed force which may be considerable. Additionally, the boss construction may be influenced by an axially inward directed force, e.g., when a valve or coupling member is mounted to the boss, and possibly by unintended stress caused by impacts or blows. It is important that the construction and mounting/fixation of the boss is also capable of resisting such forces. The same is valid for torsion forces which may occur when for instance the valve member is mounted onto the boss, which is usually formed with treads and screwed into the boss. Torsion forces to be concerned in this regard could also occur when the fibre reinforcement is winded onto the inner liner. It is especially important that the boss provides a safe and durable sealing against the adjacent parts of the pressure container. The sealing has to be such that the above-mentioned forces are not damaging to the sealing effect.

Norwegian Patent No. 312048, mentioned above, discloses a boss suitable for use in the present type of pressure containers.

Composite pressure containers can contain different fluids such as propane and butane, for domestic use often with a relatively low maximum pressure of about 35 bars. The containers can also hold fluids such as CNG, hydrogen and other industrial gas types often requiring a higher maximum pressure of about 200 bars. Composite pressure containers may be adapted to withstand pressures in large intervals. Depending on the external temperature the pressure within the container may be from below atmospheric pressure and up to 2000 bars. Depending on the fluid to be contained there in the pressure containers will normally be constructed to withstand pressures within selected intervals, examples of such intervals could be but are not limited to 0-20 bars, 4- 260 bars, 1-1500 bars etc.

### Objectives of the invention

Thus, it is an object of the present invention to provide a boss suitable for use in composite pressure containers holding fluids of not only relatively low pressures, but which can also be used on pressure containers holding fluids of higher pressures, and which boss is not expensive to produce.

During refilling, service and maintenance the coupling or valve member may be removed. If the container is not empty the gas/fluid will immediately try to escape trough the main opening when it is opened. The gas will have a high impact on the coupling or valve member which could result in hazardous incidences.

Further it is therefore an objective of the present invention to provide a boss construction that gives notice of that the container contains fluid under pressure and which retains the coupling or valve member after the member is initially loosened.

To obtain these and other objectives the present invention provides a boss for a composite pressure container for fluids, wherein the pressure container comprises an inner fluid-tight liner layer and a pressure supporting layer formed by winding fibre-reinforcement onto the liner layer, as well as at least one central aperture in one end provided with the boss for fitting a coupling or valve member,
wherein the boss comprises an opening comprising mounting means for mounting said coupling or valve member in the opening,
wherein the inner diameter of the opening in an upper area near a neck part is larger than the inner diameter of the opening in an inner area axially placed inside the upper area,
wherein the mounting means comprises internal threads (female threads) arranged in the upper area,
wherein the inner area of the opening is adapted to receive at least one O-ring connected to an engaging surface of the coupling or valve member, and
wherein the internal threads in the upper area have an axial length (T) which is larger than the axial distance (L) from the internal threads to the centre of the at least one O-ring.

In one embodiment of the boss according to the present invention the coupling or valve member when being removed from the boss is retained by the internal threads after the O-ring is no longer in contact with the inner area.

In one aspect the present invention provides a boss, wherein the axial distance from the internal threads to the centre of the at least one O-ring is the distance from the axial inner end of the threads and the centre of the axially outer at least one O-ring.

In another aspect the present invention provides a boss wherein the difference between axial length of the internal threads and the axial distance from the internal threads to the centre of the at least one O-ring is at least two times the pitch of the thread.

In yet another aspect the present invention provides a boss, wherein the boss comprises an imbedded member at least fully imbedded towards the inside of the pressure container, and wherein the boss comprises a lip arranged between the imbedded member and the coupling or valve member in the inner area.

In one aspect the boss comprises a connecting flange for connecting to the liner layer, and a neck part axially placed outside the connecting flange, and wherein the fibre-reinforcement of the pressure container is winded against the neck part,

### Brief description of the drawings

The invention will now be described with reference to the examples which are shown in the figures, wherein:
Figure 1 shows a cross-section view of an embodiment of the boss with the coupling or valve member tightly secured.
Figure 2 shows a cross-section view of the embodiment of the boss according to figure 1, but with the coupling or valve partly unscrewed.
Figure 3 illustrates an embodiment of the present invention where one O-ring is employed.

### Principal description of the invention

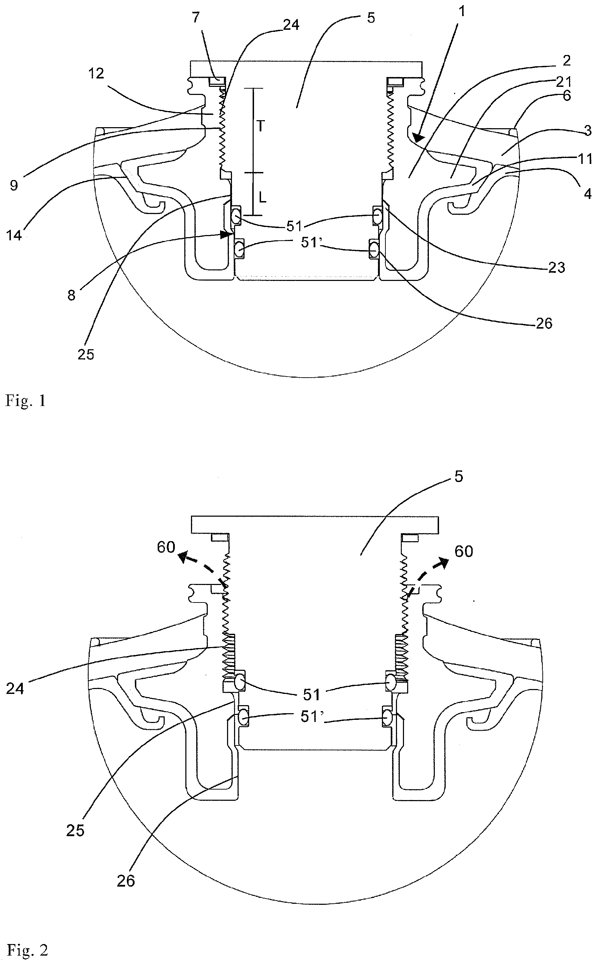

Figure 1 shows one embodiment of a boss 1 on a pressure container, wherein the boss 1 comprises an opening wherein a coupling or valve member 5 is fitted. The boss 1 is welded, glued, casted, moulded, or in another way fixed to an inner liner layer 4 on the composite pressure container with a connecting flange 11. On top of the connecting flange and the liner layer, a fibre-reinforced layer 3 is winded in a way known per se. The fibre-reinforced layer thus functions as a pressure supporting layer, both for the boss 1 and the liner layer 4. Further a protective shell 6 may, as illustrated, be arranged on the outside of the container.

The boss comprises a neck part 12 which is placed axially outside the connecting flange and pressure container. The fibre-reinforcement is winded against the neck part, which provides for good control of the winding of the fibre-reinforcement, and prevents the fibre-reinforcement from covering the opening.

The boss in addition comprises an imbedded member 2. The imbedded member 2 is made from a material with at least sufficient structural consistency and resistance against the inner pressure. The coupling or valve member 5 is to be connected to and can be detached from the imbedded member 2. The material for the imbedded member 2 may be different from or equal to the material of the rest of the boss 1 in which the imbedded member 2 is imbedded. The imbedded member comprises an opening which is fitted with mounting means 24, 25 for mounting the coupling or valve member 5. The opening in the boss may comprise further mounting means 26. From a production economic view, metal is preferred; however, the imbedded member 2 may also be formed from other materials, possibly plastic materials, e.g., fibre-reinforced plastic.

Except for the mounting means 24, 25, the imbedded member is substantially cast imbedded through injection moulding in the remaining material constituting the boss. The imbedded member 2 is preferably formed with a lower flange 21, which extends radially inside the connecting flange 11. In this way, the pressure supporting fibre-reinforcement will also cover the outer part of the lower flange of the imbedded member, and thus, prevent movement in an axial direction.

The mounting means 24, 25, 26 consist of a threaded part 24, which is formed to receive the coupling or valve member 5, and supporting surfaces 25, 26.

Only the outer surface of the coupling or valve member 5 is illustrated in detail on figure 1, as the invention illustrated on figure 1 relates to the connection between the coupling or valve member 5 and the boss 1 and not to the internal configuration of the coupling or valve member as such.

The mounting means 24 for mounting the coupling or valve member 5 is, in this embodiment, internal threads. The threads are arranged on a part of the inner cylindrical surface of the opening forming a cylindrical threaded section.

The boss further comprises a lip 23 formed from the material of the boss, which upon mounting of the coupling or valve member 5 is positioned between the valve member and the imbedded member 2 at the end of the boss axially opposite the neck 12, and arranged inside the pressure container. The surface of the lip facing the opening forms the sealing surfaces at the inner end of the opening, in that the material of the boss imbeds the imbedded member in the inner part of the opening. The valve member is fitted with two O-rings 51, 51' to further improve the sealing between the outer surface of the coupling or valve member and the boss. Although the invention is here illustrated employing two O-rings 51, 51' a configuration with only one O-ring 51 can equally be employed to benefit from the present aspect of the present invention.

Contents under pressure within the container will result in pressure directed from the inside of the container towards the boss 1. Such pressure results in forces against the inner part of the boss pressing the part of the boss comprising the lip 23 towards the O-rings 51, 51' thereby enhancing the sealing effects of the O-rings.

The boss and the liner layer are produced in a known way in a polymer material, preferably by spray casting, injection moulding, and blow moulding, respectively; however, other materials or production methods may also be contemplated.

The connecting flange is fixed to the liner layer 4 through an inclined surface 14. As mentioned above, the fixation may be carried out in a known way by welding, by different gluing techniques, or by other techniques, depending on the materials used. Alternatively, to the solution shown, the boss is an integrated part of the liner layer or the liner layer may be melted together with the connecting flange to form a continuous surface toward the opening, or the liner forms an integrated flange where the boss is connected to the outside of the integrated liner flange possibly through threads on the outside thereof.

To prevent movement of the imbedded member 2 caused by torsion as well as by inward directed forces, e.g., when fixing a valve, the member 2 may be formed with gripping organs which prevent rotational movement for the imbedded member 2 relative to the pressure container. These gripping organs may be formed as holes, recesses or grooves in the imbedded member.

The coupling or valve member 5 may comprise an environmental O-ring 7 or similar protection part arrange near the neck 12 of the boss. The purpose of the environmental O-ring 7 is to seal the outside entrance to the connection between the mounting means 24, 25 and 26 and the coupling or valve member 5. The environmental O-ring 7 limits the possibility for moisture or dirt or dust to enter the boss, however the optional environmental O-ring 7 is mainly a protection against the environment within which the container is placed and not an O-ring sealing against the internal pressure within the container.

The boss 1 further comprises an increased inner diameter in an area 9 near the neck 12 compared to the inner diameter of an area 8 opposite the neck 12 and near the inside of the container. The area 9 comprises the internal threads mounting means 24.

Figure 2 illustrates the same boss as figure 1 but after the coupling or valve member 5 has been partly unscrewed from the mounting means 24. The coupling or valve member 5 is in this position still retained by the threaded mounting means 24 in the area 9 but due to the smaller diameter in the area 8 close to the inside of the container the O-rings 51 and 51' are no longer connected to the mounting means 25 and 26 respectively. Thereby a small fluid passage is opened between the coupling or valve member 5 and the boss. Therefore if a pressurised fluid is present in the container when the coupling or valve member 5 is unscrewed a part of the fluid will due to the pressure difference be forced through the passage out to the surroundings near the flange 12. The fluid stream out of the passage will create a gas flow that is measurable, noticeable, detectable or recognisable, whereby the user can receive a warning that the container is still pressurised and should not be opened further before the pressurised fluid has been safely removed. The warning is created whilst the coupling or valve member 5 is still retained by the threaded mounting means 24. In one embodiment the gas flow may create a sound recognisable by the user. Accordingly the present embodiment of the present invention provides a recognisable signal of the presence of pressure to a user trying to open the pressure container. Without the present invention the user is not warned of the remaining pressure in the container and the user may continue to unscrew the coupling or valve member 5 until it is fully detached at which point the force of the depressurising fluid may cause the coupling or valve member to be propelled out with a great hazard risk. Accordingly the present embodiment of the present invention increases the safety of the handling of pressurized container.

The axial length of the threaded area 24, on figure 1 illustrated as T preferably has an axial length longer than the axial distance L from the centre of the O-ring 51 and to the border of the area 9 with an increased diameter, so that the coupling or valve member 5 is retained by the threads 24 when pressure/fluid 60 is released via the threads as illustrated on figure 2.

When the inner diameter of the at least one opening in an upper area 9 near the neck part 12 is larger than the inner diameter of the opening in an inner area 8 axially placed inside the upper area 9 then as the coupling or valve member is unscrewed and moved axially outward the O-ring 51 is moved from engagement with the surface 25 in the inner area 8 and to the upper area 9 with a larger diameter. This results in the O-ring 51 being released from the engagement with the surface of the opening and a fluid passage is obtained. The coupling or valve member 5 is preferable retained by the internal threads 24, when the passage is first formed and additional screwing action is required to release the coupling or valve member 5.

In one embodiment in the case where more than one O-rings 51, 51' are present the diameter of the opening in the boss 1 may in the inner area 8 be reduced in a number of steps equal to the number of O-rings. The surfaces with different diameters are positioned so as to allow for release of the engagement of all the O-rings with the inner surface of the opening while the coupling or valve member 5 is still retained by the threads 24.

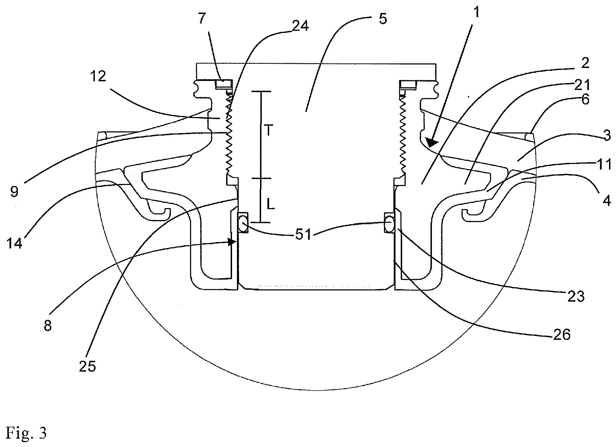

Figure 3 illustrates an embodiment of the present invention where only one O-ring 51 is employed; further the opening in the boss 1 only has one diameter in the inner area 8.

A person skilled in the art will appreciate that the number of O-rings and the diameter of the different sections of the opening in the boss may vary without diverting from the present aspect of the present invention.

The production of any of the embodiments of the boss may be performed using well known commercially available methods.

## Claims

1. A composite pressure container for fluids with a boss (1), wherein the pressure container comprises an inner fluid-tight liner layer (4) and a pressure supporting layer (3) formed by winding fibre-reinforcement onto the liner layer, as well as at least one central aperture in one end provided with the boss (1) for fitting a coupling or valve member (5),
wherein the boss (1) comprises an opening comprising mounting means (24, 25, 26) for mounting said coupling or valve member (5) in the opening, wherein the mounting means (24) comprises internal threads arranged in an upper area (9),
wherein the inner diameter of the opening in the upper area (9) near a neck part (12) is larger than the inner diameter of the opening in an inner area (8) axially placed inside the upper area (9),
wherein the inner area (8) of the opening is adapted to receive at least one O-ring (51) connected to an engaging surface of the coupling or valve member (5),
wherein the internal threads (24) in the upper area (9) have an axial length (T) which is larger than the axial distance (L) from the internal threads to the centre of the at least one O-ring (51), and
wherein the boss (1) comprises an imbedded member (2) fully imbedded towards the inside of the pressure container, and **characterised in that** the boss comprises a lip (23) arranged between the imbedded member (2) and the coupling or valve member (5) in the inner area (8).

2. The composite pressure container of claim 1, wherein the coupling or valve member (5) when being removed from the boss is retained by the internal threads (24) after the at least one O-ring (51) is no longer in contact with the inner area (8).

3. The composite pressure container according to claim 1 or 2, wherein the axial distance (L) from the internal threads to the centre of the at least one O-ring (51) is the distance from the axial inner end of the threads (24) and the centre of the axially outer at least one O-ring (51).

4. The composite pressure container according to any one of the claims 1, 2, or 3, wherein the difference between T and L is at least two times the pitch of the thread.

5. The composite pressure container according to any one of the claims 1, 2, 3, or 4, wherein the diameter of the inner area (8) is reduced in two steps adapted to receive two O-rings (51, 51') connected to an engaging surface of the coupling or valve member (5), wherein the surfaces with different diameters are positioned so as to allow for release of the engagement of the O-rings with the inner surface of the opening while the coupling or valve member (5) is still retained by the threads (24).

## Patentansprüche

1. Komposit-Druckbehälter für Fluide mit einem Aufsatz (1), wobei der Druckbehälter eine innere fluiddichte Auskleidungsschicht (4) und eine Druckstützschicht (3) umfasst, die durch Wickeln einer Faserverstärkung auf die Auskleidungsschicht gebildet wird, sowie mindestens eine zentrale Öffnung an einem Ende, die mit dem Aufsatz (1) zum Anbringen eines Kupplungs- oder Ventilelements (5) versehen ist,
wobei der Aufsatz (1) eine Öffnung aufweist, die ein Befestigungsmittel (24, 25, 26) zur Montage des Kupplungs- oder Ventilelements (5) in der Öffnung aufweist,
wobei das Befestigungsmittel (24) ein Innengewinde aufweist, das in einem oberen Bereich (9) angeordnet ist,
wobei der Innendurchmesser der Öffnung in dem oberen Bereich (9) in der Nähe eines Halsteils (12) größer ist als der Innendurchmesser der Öffnung in einem inneren Bereich (8), der axial innerhalb des oberen Bereichs (9) angeordnet ist,
wobei der innere Bereich (8) der Öffnung ausgelegt ist, um mindestens einen O-Ring (51) aufzunehmen, der mit einer Eingriffsfläche des Kupplungs- oder Ventilelements (5) verbunden ist,
wobei das Innengewinde (24) im oberen Bereich (9) eine axiale Länge (T) aufweist, die größer ist als der axiale Abstand (L) von dem Innengewinde zur Mitte des mindestens einen O-Rings (51), und
wobei der Aufsatz (1) ein eingebettetes Element (2) umfasst, das vollständig in Richtung des Inneren des Druckbehälters eingebettet ist, und
**dadurch gekennzeichnet, dass** der Aufsatz eine Lippe (23) umfasst, die zwischen dem eingebetteten Element (2) und dem Kupplungs- oder Ventilelement (5) im inneren Bereich (8) angeordnet ist.

2. Komposit-Druckbehälter nach Anspruch 1, wobei das Kupplungs- oder Ventilelement (5) beim Entfernen von dem Aufsatz durch das Innengewinde (24) gehalten wird, nachdem der mindestens eine O-Ring (51) nicht mehr mit dem inneren Bereich (8) in Kontakt steht.

3. Komposit-Druckbehälter nach Anspruch 1 oder 2, wobei der axiale Abstand (L) von dem Innengewinde zur Mitte des mindestens einen O-Rings (51) der Abstand vom axialen inneren Ende des Gewindes (24) und der Mitte des axial äußeren mindestens einen O-Rings (51) ist.

4. Komposit-Druckbehälter nach einem der Ansprüche 1, 2 oder 3, wobei die Differenz zwischen T und L mindestens das Zweifache der Steigung des Gewindes beträgt.

5. Komposit-Druckbehälter nach einem der Ansprüche 1, 2, 3 oder 4, wobei der Durchmesser des inneren Bereichs (8) in zwei Schritten reduziert wird, ausgelegt für die Aufnahme von zwei O-Ringen (51, 51'), verbunden mit einer Eingriffsfläche des Kupplungs- oder Ventilelements (5), wobei die Oberflächen mit unterschiedlichen Durchmessern so positioniert sind, dass die Freigabe des Eingriffs der O-Ringe in die Innenfläche der Öffnung ermöglicht wird, während das Kupplungs- oder Ventilelement (5) noch durch das Gewinde (24) gehalten wird.

## Revendications

1. Récipient sous pression composite pour fluides comportant un bossage (1), dans lequel le récipient sous pression comprend une couche de revêtement interne étanche aux fluides (4) et une couche supportant la pression (3) formée en enroulant un renforcement des fibres sur la couche de revêtement, ainsi qu'au moins une ouverture centrale dans une extrémité dotée du bossage (1) pour ajuster un élément de couplage ou formant soupape (5),
dans lequel le bossage (1) comprend une ouverture comprenant des moyens de montage (24, 25, 26) pour le montage dudit élément de couplage ou formant soupape (5) dans l'ouverture, dans lequel les éléments de montage (24) comprennent des filets internes disposés dans une zone supérieure (9),
dans lequel le diamètre interne de l'ouverture dans la zone supérieure (9) près d'une partie formant collet (12) est supérieur au diamètre interne de l'ouverture dans une zone interne (8) placée axialement à l'intérieur de la zone supérieure (9),
dans lequel la zone interne (8) de l'ouverture est adaptée pour recevoir au moins un joint torique (51) raccordé à une surface d'engagement de l'élément de couplage ou formant soupape (5),
dans lequel les filets internes (24) dans la zone supérieure (9) ont une longueur axiale (T) qui est supérieure à la distance axiale (L) depuis les filets internes au centre du au moins un joint torique (51),
et
dans lequel le bossage (1) comprend un élément encastré (2) intégralement encastré vers l'intérieur du récipient sous pression, et **caractérisé en ce que** le bossage comprend une lèvre (23) disposée entre l'élément encastré (2) et l'élément de couplage ou formant soupape (5) dans la zone interne (8).

2. Récipient sous pression composite selon la revendication 1, dans lequel l'élément de couplage ou formant soupape (5) lorsqu'il est enlevé du bossage est retenu par les filets internes (24) après que le au moins un joint torique (51) n'est plus en contact avec la zone interne (8).

3. Récipient sous pression composite selon la revendication 1 ou 2, dans lequel la distance axiale (L) depuis les filets internes au centre du au moins un joint torique (51) est la distance depuis l'extrémité interne axiale des filets (24) et du centre du au moins un joint torique (51) externe axialement.

4. Récipient sous pression composite selon l'une quelconque des revendications 1, 2, ou 3, dans lequel la différence entre T et L est au moins deux fois le pas du filet.

5. Récipient sous pression composite selon l'une quelconque des revendications 1, 2, 3, ou 4, dans lequel le diamètre de la zone interne (8) est réduit en deux étapes adaptées pour recevoir deux joints toriques (51, 51') raccordés à une surface d'engagement de l'élément de couplage ou formant soupape (5), dans lequel les surfaces avec différents diamètres sont positionnées de manière à permettre le déblocage de l'engagement des joints toriques avec la surface interne de l'ouverture tandis que l'élément de couplage ou formant soupape (5) est encore retenu par les filets (24).
